# EUROPEAN PATENT SPECIFICATION

(11) **EP 0 437 880 B1**
(45) Date of publication and mention of the grant of the patent: **22.09.1993**
(21) Application number: 90203293.7
(22) Date of filing: 12.12.1990
(51) Int. Cl.: C10M 101/02, C10M 107/02, C10M 107/46, C08F 8/34, C10M 177/00

(54) **Lubricating oil compositions and their preparation**
Schmiermittelzusammensetzung und ihre Herstellung
Compositions d'huiles lubrifiantes et leur préparation

(30) Priority: 21.12.1989 GB 8928963
(43) Date of publication of application: 24.07.1991
(73) Proprietor: SHELL INTERNATIONALE RESEARCH MAATSCHAPPIJ B.V., 2596 HR Den Haag (NL)
(72) Inventor: van Zon, Arie, NL-1031 CM Amsterdam (NL); van Jole, Everardus Joannus Alouisius, NL-1031 CM Amsterdam (NL); Gadd, Paul George, Rio de Janeiro, RJ22250 (BR)

(56) References cited:
- EP-A- 0 368 395
- US-A- 3 220 985
- US-A- 4 031 068

## Description

The present invention relates to lubricating oil compositions and to their preparation.

Continuing development of internal combustion engines and the desire for increased intervals between oil changes places ever increasing demands on lubricating oils. Two properties in particular for which improved performance is desired are dispersancy and oxidation resistance. Typically the approach to improving such properties involves developing specific performance additives which are blended with an appropriate base oil.

Research Disclosure 13449 of June 1975 discloses the use of aromatic sulphonyl azides containing a carboxylic acid (or anhydride) group in the preparation of functionally substituted EPM and EPDM polymers. The sulphonyl azides are said to decompose thermally to give sulphonyl nitrenes which become grafted to the EPDM polymers by addition across carbon-carbon double bonds (giving aziridines) and insertion into C-H bonds. Thermoplastic ionomers with attractive physical properties are obtained by compounding the engrafted EPDM polymers with metal salts.

US Patent No. 3,220,985 discloses modification of polymers including cis-1,4-polyisoprene, polybutadiene and styrene-butadiene rubber, particularly polypropylene and polyisobutylene, by heating with a monosulphonyl azide having the formula RSO₂N₃ wherein R represents an organic radical (e.g. 3-azidosulphonylbenzoic acid), in order to prepare products having improved dyeability, emulsifiability and adhesion to other materials. UK Patent No. 1,446,062 discloses modification of similar polymers with mixed anhydrides of sulphonylazides with at least one carboxyl group.

US Patent No. 4,440,659 discloses the preparation of ashless dispersants suitable for adding to lubricating oil by co-grafting maleic anhydride and an alkyl acrylate or methacrylate onto a Bright Stock mineral oil backbone followed by reaction with an amine to form amides and/or imides.

US Patent No. 4,031,068 discloses antioxidant compounds, suitable for reaction with polymers having available carbon-hydrogen bonds, of the formula: 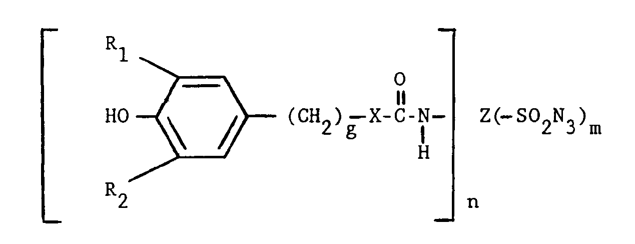
wherein:
R₁ is alkyl of from 1 to 12 carbon atoms (preferably 3 to 8 carbon atoms; especially tertiary alkyl), cyclohexyl, alkyl-cyclohexyl (e.g., C₇-C₁₀ alkylcyclohexyl), benzyl or alkylbenzyl (e.g. C₈-C₁₁ alkylbenzyl);
R₂ is hydrogen or has one of the values assigned to R₁, with the proviso that R₁ and R₂ together have at least 2 carbon atoms;
g has a value from 0 to 5,
X is a divalent bridge member such as -CH₂O-, -CH₂NH-, or 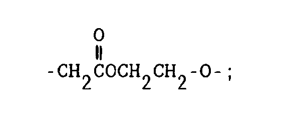
m and n are each 1 or 2; and Z is, depending on the values of m and n, a divalent, trivalent or tetravalent group selected from:
a. an alkylene group of from 2 to 5 carbon atoms when each of m and n is 1,
b. a divalent or trivalent benzene group when n is 1 and m is 1 or when m is 1 and n is 2, and
c. a divalent, trivalent or tetravalent group selected from naphthylene, diphenyl ether, and benzene groups when each of m and n is 1 or 2.

Examples of polymers having available carbon-hydrogen bonds include hydrocarbon material such as gasoline, both natural and synthetic, diesel oil, mineral oil, fuel oil, drying oil, cutting fluids, waxes and resins. Polymers treated with the antioxidant compounds are said to be remarkable for their ability to resist aging, even after solvent extraction.

It has now surprisingly been found possible to modify directly a base oil by molecular attachment of certain aromatic groups via a sulphonamido linkage and thereby achieve enhanced dispersancy.

According to the present invention therefore there are provided lubricating oil compositions comprising a base oil functionalised by the presence of aromatic groups attached to molecules of the base oil by a sulphonamido linkage, characterised in that the aromatic groups and associated sulphonamido linkages together have the structure RSO₂NH- wherein R represents a phenyl group bearing a substituent -COX, wherein X is a moiety selected from -OH, and alkali metal, alkaline earth metal and ammonium salts thereof, groups -OR¹, where R¹ is an optionally substituted alkyl group, and groups -NHR², wherein R² is an optionally substituted alkyl group.

R represents a phenyl group bearing a substituent -COX, wherein X is a moiety selected from -OH, and alkali metal, e.g. sodium or potassium, alkaline earth metal, e.g. calcium, and ammonium salts thereof, groups OR¹, where R¹ is an optionally substituted alkyl group, and groups -NHR², wherein R² is an optionally substituted alkyl group. The substituent -COX may conveniently be attached at the 3- position of the phenyl group.

The group R¹ may be an unsubstituted alkyl group, preferably a C₆₋₁₈ alkyl group, e.g. a C₁₀₋₁₄ alkyl group, such as a dodecyl group; or it may be a substituted alkyl group such as a polyalkylene glycol-derived moiety, e.g. a group of formula R³-(OCH₂CH₂)ₚ-, where p is 3 to 9 and R³ is a C₉₋₁₅ alkyl group, or a group of formula H(OCH₂CH₂)_{q}), where q is 4 to 14, or an aminoalkyl group, e.g. a 2-pyrrolidinoethyl group. Two groups OR¹ can together be a bridging group, e.g. a group of formula -O-(CH₂CH₂O)_{q}- where q is 4 to 14.

The groups -NHR² are preferably derived from C₁₋₁₈ amines containing 1 to 8 nitrogen atoms. Such C₁₋₁₈ amines may be branched or unbranched, saturated aliphatic, primary or secondary amines, containing 1 to 8 nitrogens, preferably mono- or diamines, such as ethylamine, butylamine, sec. butylamine, diethylamine and 3-dimethylamino -1-propylamine, but including higher polyamines such as alkylene polyamines, wherein pairs of nitrogen atoms are joined by alkylene groups of 2 to 4 carbon atoms. Thus, polyamines of the formula:

NH₂(CH₂)ₙ-[NH(CH₂)ₙ]ₘ-NH₂

are included where n is 2 to 4 and m is 0 to 6. Examples of such polyamines include tetraethylene pentamine, tripropylene tetramine, triethylene tetramine, diethylene triamine, n-aminoalkyl piperazines, e.g., N-(2-aminoethyl) piperazine, N,N'-di(2-aminoethyl) piperazine, and corresponding commercial mixtures such as "Polyamine H", and "Polyamine 500".

In particularly preferred compositions of the invention R represents a phenyl group bearing a substituent -CONHR² wherein the group -NHR² is derived from 3-dimethylamino-1-propylamine.

The base oil may be a base oil of mineral or synthetic origin. Base oils of synthetic origin may typically be mixtures of C₁₀₋₅₀ hydrocarbon polymers e.g. liquid polymers of alpha-olefins. Preferably the base oil is of mineral origin, such as those sold by the Royal Dutch/Shell Group of companies under the designations "HVI" or, most preferably, "XHVI" (trade mark).

The invention also provides a process for preparing a lubricating oil composition according to the invention which comprises reacting the base oil with an aromatic sulphonyl azide. This reaction may be followed by a further treatment to modify substituents on the aromatic moiety.

A preferred process of the invention comprises heating the base oil with an aromatic sulphonyl azide of formula R'-SO₂-N₃ wherein R' is a phenyl group bearing a substituent -COOH, at a temperature in the range 100 to 300°C, preferably 150 to 250°C, optionally followed by neutralising the resulting composition with an alkali metal or alkaline earth metal base, ammonia or an amine, or by further reacting the resulting composition, optionally after conversion of -COOH groups to -COCl groups, with an alcohol of formula HOR¹, where R¹ is as defined above or with an amine NH₂R², where R² is an optionally substituted alkyl group, preferably a C₁₋₁₈ amine containing 1 to 8 nitrogen atoms, advantageously 3-dimethylamino-1-propylamine.

The reaction of the base oil with the aromatic sulphonyl azide may if desired be effected in the presence of an anti-oxidant, e.g. a sterically hindered phenol such as "Ionox 220", trade mark for 4,4'-methylene-bis-2,6-ditertiary butylphenol or "Ionox 330", a trade mark for 1,3,5-trimethyl-2, 4,6-tris (3,5-di-tert-butyl-4-hydroxybenzyl) benzene.

It is greatly preferred for the above reactions to be effected in the absence of oxygen, e.g under nitrogen.

The amount of aromatic sulphonyl azide used may conveniently be e.g. 0.5 to 10%w, preferably 1 to 8%w based on the base oil. If desired, higher amounts, e.g. 10%w to 15%w, may be used in order to provide a concentrated lubricating oil composition which would be admixed with additional base oil for use as a lubricant.

For use as lubricants, lubricating oil compositions in accordance with the invention may additionally contain anticorrosion additives, and/or antioxidants and/or a detergent and/or an extreme-pressure additive and/or one or more VI improvers and/or pour-point depressants, as will readily appreciated by those skilled in the art.

The invention will be further understood from the following ilustrative Examples, in which two base oils of mineral origin were used, viz. "XHVI 8.2" ("XHVI" is a trade mark) and "HVI 130 H". "XHVI 8.2" is a bright and clear high viscosity index base oil having viscosity at 100°C 7.8 to 8.5 mm²/s (ASTM D445), viscosity index 140 (ASTM D2270) and minimum flash point 210° (ASTM D 93). "HVI 130 H" is a hydroprocessed, bright and clear, high viscosity index base oil having viscosity at 100°C 9.0 to 10.0 mm2/S, viscosity index 95 and minimum flash point 225°C (ASTM D 92).

### EXAMPLES 1 and 2

### Reaction of 3-azidosulphonylbenzoic acid with base oils

"XHVI 8.2" base oil was heated to 200°C under nitrogen. A slurry of 3-azidosulphonylbenzoic acid (ASB) in an aliquot of "XHVI 8.2" base oil was added to the heated base oil, with stirring, over 60 minutes, in an amount to result in a mixture containing 4.1% w/w ASB. The resulting mixture was maintained at 200°C for 10 minutes, after which it was allowed to cool to ambient temperature (20°C) and filtered. Mass spectrometry and infrared analyses revealed no residual ASB in the filtrate and led to the conclusion that ASB had reacted with molecules of the base oil to yield N-alkylated carboxybenzenesulphonyl amides.

A corresponding precedure (Example 2) was followed using "HVI 130 H" base oil, in place of the "XHVI 8.2" base oil, with corresponding results.

### EXAMPLES 3 and 4

### Reaction of ASB-functionalised base oils with 3-dimethylamino-1-propylamine

The product of Example 1 (1001g), 3-dimethylamino-1-propylamine (DAP) (55.3g), triethylamine (54.8g), boron trifluoride etherate ((C₂H₅)₂O.BF₃) (76.6g) and toluene (500ml) were stirred together and heated at 110°C under nitrogen, with stirring, for 70 hours, at which stage infrared analysis indicated complete conversion of the product of Example 1. Excess other reagents were distilled off in vacuo at 90°C.

A corresponding procedure (Example 4) was followed using the product of Example 2, with corresponding results.

The procedure of Example 3 was later repeated except that reaction was for 16 hours instead of 70 hours, with essentially the same result.

### EXAMPLE 5

### Reaction of ASB-functionalised base oil with 3-dimethylamino-1-propylamine

The process of Example 3 was repeated but without the triethylamine and the toluene. Infrared analysis indicated complete conversion after heating at 110°C for 21 hours.

### EXAMPLE 6

### Reaction of ASB-functionalised base oil with dodecanol

The product of Example 1 (939.6g) 1-dodecanol (31.5g), p-toluenesulphonic acid (19.6g) and toluene (335.2g) were heated at 110°C for 3 hours in a Dean-Stark apparatus, with azeotropic removal of water. The mixture was then allowed to cool to ambient temperature (20°), filtered to remove insolubles and the filtrate was extracted with aqueous sodium hyroxide (0.1M, 400ml). The organic layer was then separated off, dried (MgSO₄), filtered, and functionalised base oil was isolated by removal of volatiles in vacuo at 110°C.

### EXAMPLES 7 and 8

### Reaction of ASB-functionalised base oils with dodecanol

The product of Example 2 (939.6g), 1-dodecanol (31.5g), p-toluenesulphonic acid (3.2g) and toluene (335.2g) were heated at 110°C for 3 hours in a Dean-Stark apparatus, with azeotropic removal of water. The mixture was then allowed to cool to ambient temperature (20°C) and was stirred together with an excess (2-fold based on total initial acids) of calcium hydroxide for 1 hour. The resulting slurry was filtered and the desired functionalised base oil was isolated by removal of volatiles in vacuo at 110°C.

A corresponding procedure (Example 8) was followed using the product of Example 1, giving a product entirely equivalent to that of Example 6.

### EXAMPLES 9 to 12

### Conversion of ASB-functionalised base oils via acid chlorides

The products of Examples 1 and 2 were converted to corresponding acid chlorides by reaction of 100g samples with excess thionyl chloride in the presence of pyridine (5% mol, based on initial ASB) under nitrogen at 75°C.

The resulting acid chlorides derived from the products of Examples 1 and 2 were reacted with 3-dimethylamino-1-propylamine under nitrogen at 75°C for 7 hours to give products (Examples 9 and 10) corresponding to those of Examples 3 and 4.

The resulting acid chlorides were also reacted with 1-dodecanol under nitrogen at 75°C for 7 hours to give products (Examples 11 and 12) corresponding to those of Examples 6 and 7.

### Examples 13 to 17

### Reaction of 3-azidosulphonylbenzoic acid with base oil, at varying concentrations

"XHVI 8.2" base oil was reacted with various concentrations of ASB under conditions corresponding to those of Example 1. Details of quantities of ASB and of results of analyses of products are given in Table I following.

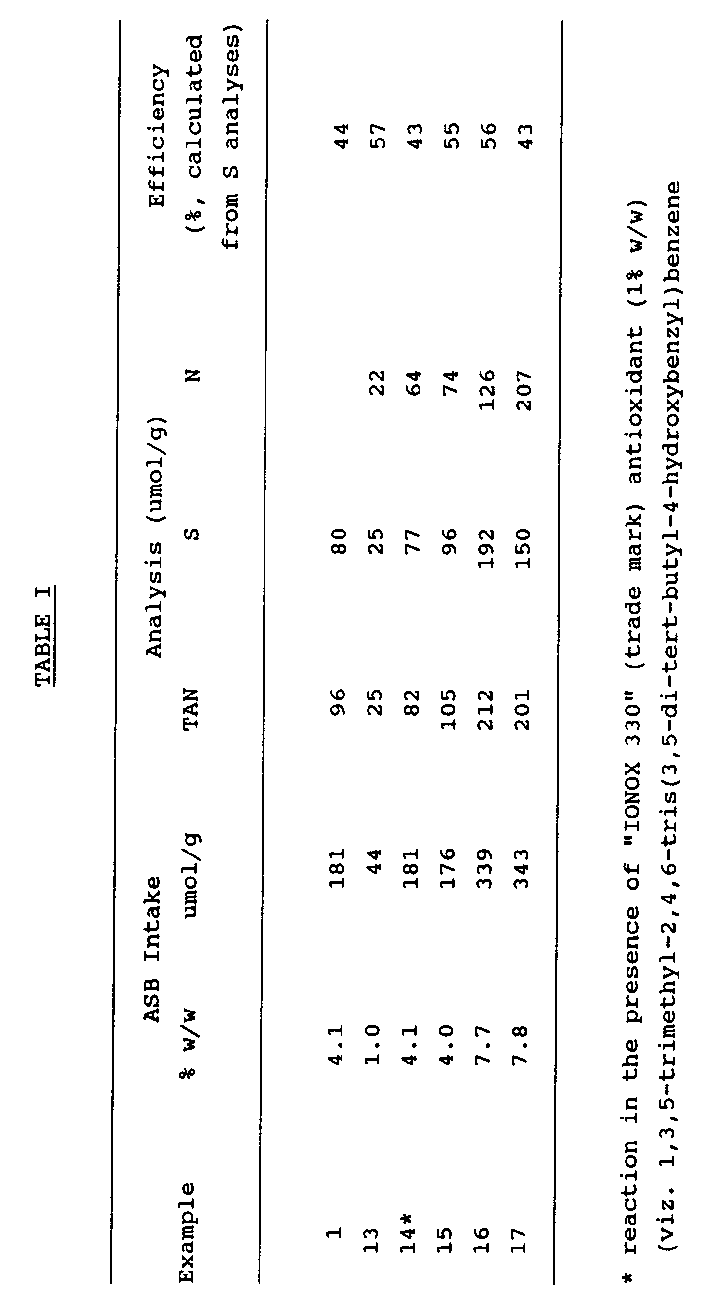

### EXAMPLE 18

### Tests

Various of the modified base oils of the above Examples were subjected to the following tests:-
1. Carbon Black Dispersancy Test (CBDT) (British Rail publication BR 669:1984)
   3% of carbon black is added to the oil and increase in kinematic viscosity at 60°C is determined, using an Ubbelohde viscometer. A low result indicates good performance.
2. Differential Scanning Calorimetry Test - onset temperature (DSC onset)
   The temperature (°C) at which oxidation begins when a small sample (2mg) is heated at controlled rate of temperature increase (20°C/minute) in an oxygen atmosphere (ambient pressure) is measured. A high result indicates good performance.
3. Differential Scanning Calorimetry Test - inhibited (DSC inhibited)
   The time elapsing (minutes) before onset of oxidation at 180°C, in an oxygen atmosphere (3.5 × 10⁶ Pa), of a sample (2mg) containing 0.5% w of a phenolic antioxidant is measured. A high result indicates good performance.
4. Shaken, Circulatory oxidation Test (SCOT)
   The time (minutes) is measured for a sample (5g) containing a soluble copper catalyst to absorb a fixed amount (25ml) of oxygen at 160°C. A high result indicates a good performance.
5. Oxidation Induction Period Test (IP 280)
   The time hours is measured for volatile acidity of a sample containing a soluble copper catalyst to reach 1mg KOH/g equivalent when oxygen is passed through the sample at 120°C (Institute of Petroleum Test IP 280). A high result indicates good performance.
6. Insolubles following oxidation Induction Period Test (IP 280 insols)
   Amounts of material (mg) which are insoluble in heptane at the end of test 5 are measured according to test IP 280 . A low result indicates good performance.
7. Wolf Strip Test
   The weight (mg) of deposit formed on a standard steel strip (18cm × 4.5cm) by sample flowing over the strip heated to 250°C in air for 12 hours at a rate of 50ml/minute is measured. A low result indicates good performance.

Results of the above tests are given in TABLE II following.

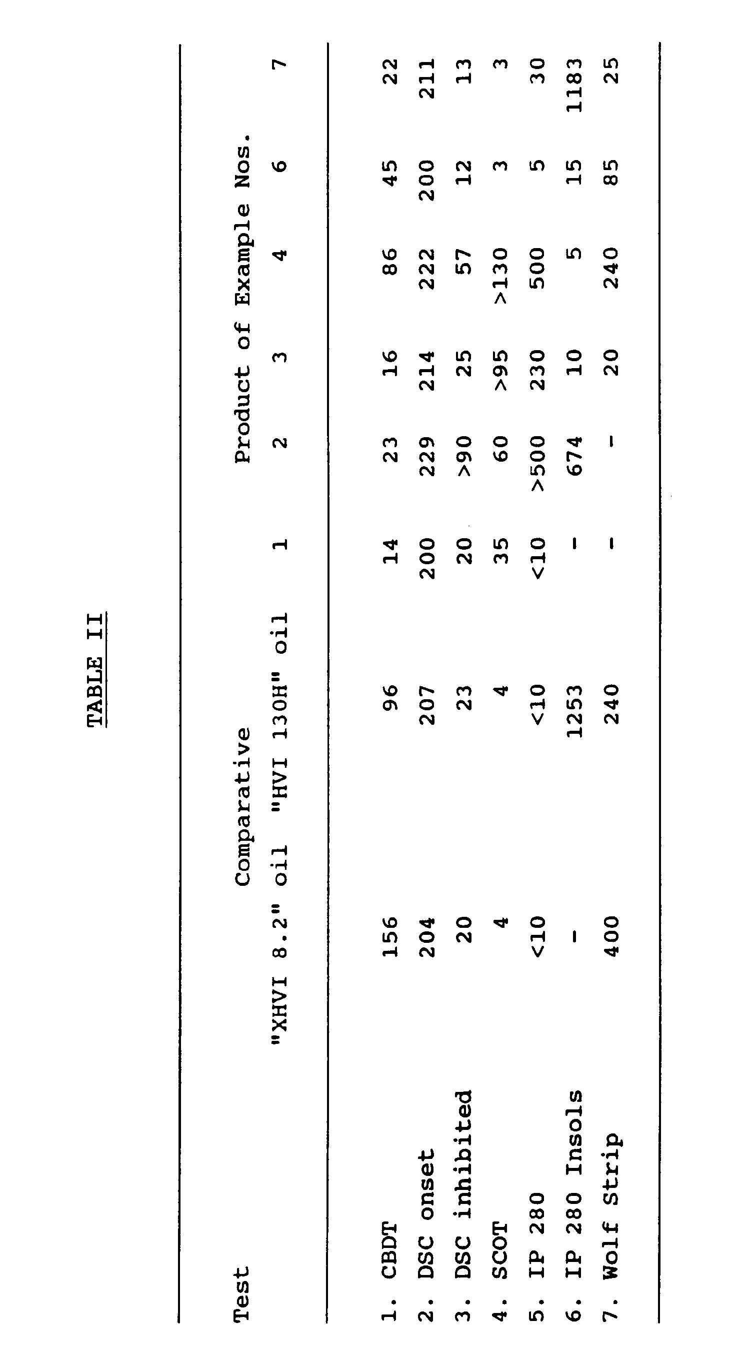

In Table II it will be noted that the products of the Examples exhibit considerably improved dispersancy relative to the base oils, and that for Examples 1 to 4 oxidation stability is greater than for the respective base oils.

### EXAMPLES 19 to 22

### Reaction of ASB-functionalised base oils with various alcohols

The product of Example 1 was reacted with various alcohols by the procedure of Example 6, the molar amount of each alcohol being equal to the molar quantity of carboxy group in the product of Example 1, with the exception of Example 21 where half that amount of alcohol was used (the alcohol in question being bifunctional). The alcohols used were as follows:
- 19: a (C₉₋₁₁) alkanol) ethoxylate containing on average 5 ethoxy moieties per molecule ("DOBANOL ethoxylate 91/5" (trade mark), available from member companies of the Royal Dutch/Shell group)
- 20,21: a non-volatile, liquid, polyethylene glycol containing on average 8 to 10 ethoxy moieties per molecule and having average molecular mass (Mn) in the range 380 to 420 ("PEG 400", available from member companies of the Royal Dutch/Shell group)
- 22: 1-(2-hydroxyethyl)-2-pyrrolidinone.

The products of examples 20 and 21 had viscosities at 100°C (ASTM D 445) of 11.2 mm²/s and 10.4 mm²/s respectively.

### EXAMPLE 23

### Reaction of 3-azidosulphonyl benzoic acid with base oil of synthetic origin

A corresponding procedure to that of Example 1 was followed using, as base oil of synthetic origin, a commercial liquid polyalphaolefin ("MOBIL SHF-61" (trade mark), a polyalphaolefin having a viscosity at 100°C of 6 mm²/s (ASTM D445) and Mn 455, corresponding to a calculated average number of carbon atoms per molecule of 32 to 33), but using ASB intake of 7.8% w/w as in Example 17. Analyses revealed no residual ASB in the filtered product, leading to the conclusion that ASB had reacted as in Example 1.

### EXAMPLE 24

### Reaction of ASB-functionalised base oil of synthetic origin with 3-dimethylamino-1-propylamine

The product of Example 23 was reacted with 3-dimethylamino-1-propylamine by the method of Example 3, with corresponding results.

### EXAMPLE 25

### Reaction of ASB-functionalised base oil of synthetic origin with dodecanol

The product of Example 23 was reacted with dodecanol by the method of Example 6, with corresponding results.

### EXAMPLE 26

### Tests

The modified base oils of Examples 19 to 22, 24 and 25 were subjected to various of the tests described above in Example 18. Results are given in Table III following:-

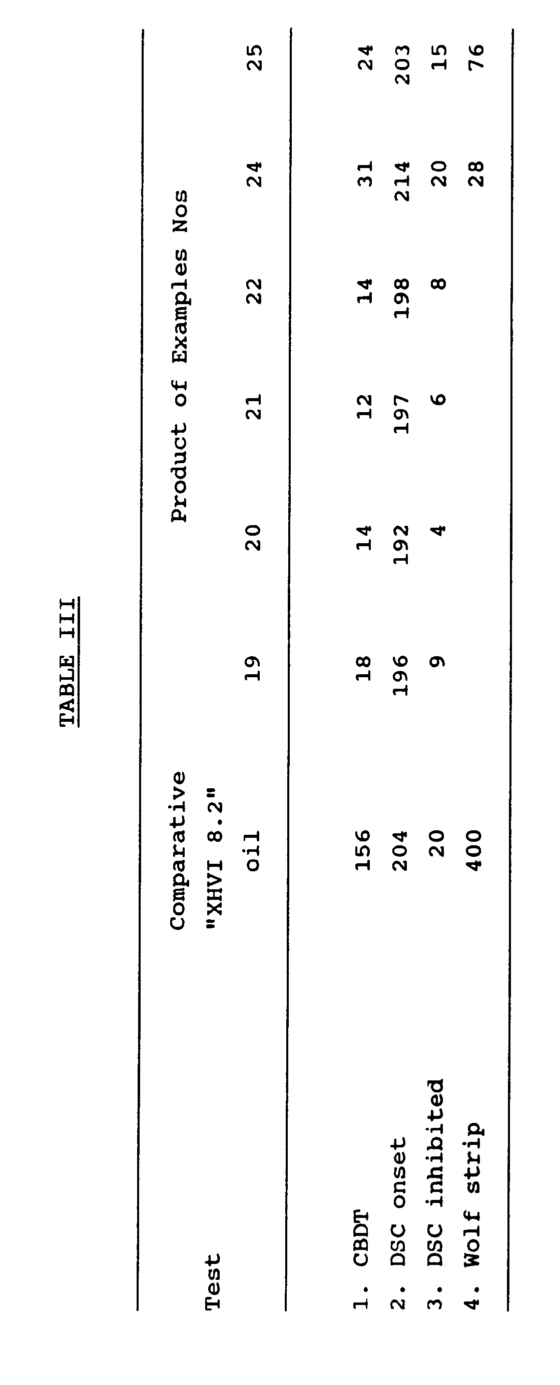

## Claims (Claims for the following Contracting State(s): FR, DE, IT, NL, GB)

1. Lubricating oil composition comprising a base oil functionalised by the presence of aromatic groups attached to molecules of the base oil by a sulphonamido linkage, characterised in that the aromatic groups and associated sulphonamido linkages together have the structure RSO₂NH- wherein R represents a phenyl group bearing a substituent -COX, wherein X is a moiety selected from -OH, and alkali metal, alkaline earth metal and ammonium salts thereof, groups -OR¹, where R¹ is an optionally substituted alkyl group, and groups -NHR², wherein R² is an optionally substituted alkyl group.

2. Composition according to Claim 1, wherein R¹ is a C₆₋₁₈ alkyl group, a group of formula R³-(OCH₂CH₂)ₚ-, where p is 3 to 9 and R³ is a C₉₋₁₅ alkyl group, a group of formula H(OCH₂CH₂)_{q}-, where q is 4 to 14, or a 2-pyrrolidinoethyl group, or two groups OR¹ together are a bridging group of formula -O-(CH₂CH₂O)_{q}-, and the groups -NHR² are derived from C₁₋₁₈ amines containing 1 to 8 nitrogen atoms.

3. Composition according to Claim 2, wherein R represents a phenyl group bearing a substituent -CONHR², wherein the group -NHR² is derived from 3-dimethylamino-1-propylamine.

4. Composition according to any one of Claims 1 to 3, wherein the base oil is of mineral origin.

5. A process for preparing a composition according to any one of Claims 1 to 4, which comprises reacting the base oil with an aromatic sulphonyl azide.

6. A process according to Claim 5, which comprises heating the base oil with an aromatic sulphonyl azide of formula R'-SO₂-N₃ wherein R' is a phenyl group bearing a substituent -COOH, at a temperature in the range 100 to 300°C, optionally followed by neutralising the resulting composition with an alkali metal or alkaline earth metal base, ammonia or an amine, or by further reacting the resulting composition, optionally after conversion of -COOH groups to -COCl groups, with an alcohol of formula HOR¹, where R¹ is an optionally substituted alkyl group, or with an amine NH₂R², where R² is an optionally substituted alkyl group.

7. A process according to Claim 6, wherein the amine NH₂R² is a C₁₋₁₈ amine containing 1 to 8 nitrogen atoms.

8. A process according to Claim 7, wherein the amine NH₂R² is 3-dimethylamino-1-propylamine.

## Claims (Claims for the following Contracting State(s): ES)

1. A process for the preparation of a lubricating oil composition comprising a base oil functionalised by the presence of aromatic groups attached to molecules of the base oil by a sulphonamido linkage, characterised in that the aromatic groups and associated sulphonamido linkages together have the structure RSO₂NH- wherein R represents a phenyl group bearing a substituent -COX, wherein X is a moiety selected from -OH, and alkali metal, alkaline earth metal and ammonium salts thereof, groups -OR¹, where R¹ is an optionally substituted alkyl group, and groups -NHR², wherein R² is an optionally substituted alkyl group, which process comprises reacting a base oil with an aromatic sulphonyl azide.

2. A process according to Claim 1, wherein R¹ is a C₆₋₁₈ alkyl group, a group of formula R³-(OCH₂CH₂)ₚ-, where p is 3 to 9 and R³ is a C₉₋₁₅ alkyl group, a group of formula H(OCH₂CH₂)_{q}-, where q is 4 to 14, or a 2-pyrrolidinoethyl group, or two groups OR¹ together are a bridging group of formula -O-(CH₂CH₂O)_{q}-, and the groups -NHR² are derived from C₁₋₁₈ amines containing 1 to 8 nitrogen atoms.

3. A process according to Claim 2, wherein R represents a phenyl group bearing a substituent -CONHR², wherein the group -NHR² is derived from 3-dimethylamino-1-propylamine.

4. A process according to any one of Claims 1 to 3, wherein the base oil is of mineral origin.

5. A process according to any one of Claims 1 to 4, which comprises heating the base oil with an aromatic sulphonyl azide of formula R'-SO₂-N₃ wherein R' is a phenyl group bearing a substituent -COOH, at a temperature in the range 100 to 300°C, optionally followed by neutralising the resulting composition with an alkali metal or alkaline earth metal base, ammonia or an amine, or by further reacting the resulting composition, optionally after conversion of -COOH groups to -COCl groups, with an alcohol of formula HOR¹, where R¹ is an optionally substituted alkyl group, or with an amine NH₂R², where R² is an optionally substituted alkyl group.

6. A process according to Claim 5, wherein the amine NH₂R² is a C₁₋₁₈ amine containing 1 to 8 nitrogen atoms.

7. A process according to Claim 6, wherein the amine NH₂R² is 3-dimethylamino-1-propylamine.

## Patentansprüche (Patentansprüche für folgende(n) Vertragsstaat(en): DE, FR, GB, IT, NL)

1. Schmierölzusammensetzungen, umfassend ein Basisöl, das durch die Gegenwart von über eine Sulfonamid-Bindung an die Moleküle des Basisöls gebundenen aromatischen Gruppen funktionalisiert ist, dadurch gekennzeichnet, daß die aromatischen Gruppen und assoziierten Sulfonamid-Bindungen zusammen die Strukturformel RSO₂NH- aufweisen , wobei R eine Phenylgruppe mit einem Substituenten -COX darstellt, wobei X eine Gruppe ist, ausgewählt aus -OH, Alkalimetall-, Erdalkalimetall- und Ammoniumsalzen davon, Gruppen -OR¹, wobei R¹ eine gegebenenfalls substituierte Alkylgruppe ist, und Gruppen -NHR², wobei R² eine gegebenenfalls substituierte Alkylgruppe ist.

2. Zusammensetzung nach Anspruch 1, wobei R¹ eine C₆₋₁₈-Alkylgruppe, eine Gruppe der Formel R³-(OCH₂CH₂)ₚ- , wobei p einen Wert von 3 bis 9 hat, und R³ eine C₉₋₁₅-Alkylgruppe , eine Gruppe der Formel H(OCH₂CH₂)_{q}-, wobei q einen Wert von 4 bis 14 hat, oder eine 2-Pyrrolidinoethylgruppe ist, oder zwei Gruppen OR¹ zusammen eine Brückengruppe der Formel -O-(CH₂CH₂O)_{q}- bilden, und die Gruppen -NHR² von C₁₋₁₈-Aminen, enthaltend 1 bis 8 Stickstoffatome, abgeleitet sind.

3. Zusammensetzung nach Anspruch 2, in welcher R eine Phenylgruppe mit einem Substituenten -CONHR² ist, wobei die Gruppe -NHR² von 3-Dimethylamino-1-propylamin abgeleitet ist.

4. Zusammensetzung nach einem der Ansprüche 1 bis 3, in welcher das Basisöl mineralischen Ursprungs ist.

5. Ein Verfahren zur Herstellung einer Zusammensetzung nach einem der Ansprüche 1 bis 4, welches das Umsetzen des Basisöls mit einem aromatischen Sulfonylazid umfaßt.

6. Ein Verfahren nach Anspruch 5, welches das Erhitzen des Basisöls mit einem aromatischen Sulfonylazid der Formel R'-SO₂-N₃ , wobei R' eine Phenylgruppe mit einem Substituenten -COOH ist, bei einer Temperatur im Bereich von 100 bis 300°C, gegebenenfalls gefolgt von einer Neutralisation der resultierenden Zusammensetzung mit einer Alkalimetall- oder Erdalkalimetallbase, Ammoniak oder einem Amin, oder von weiterem Umsetzen der resultierenden Zusammensetzung, gegebenenfalls nach Umwandlung der -COOH-Gruppen in COCl-Gruppen, mit einem Alkohol der Formel HOR¹, wobei R¹ eine gegebenenfalls substituierte Alkylgruppe ist, oder mit einem Amin NH₂R², wobei R² eine gegebenenfalls substituierte Alkylgruppe ist, umfaßt.

7. Ein Verfahren nach Anspruch 6, in welchem das Amin NH₂R² ein C₁₋₁₈-Amin mit 1 bis 8 Stickstoffatomen ist.

8. Ein Verfahren nach Anspruch 7, in welchem das Amin NH₂R² 3-Dimethylamino-1-propylamin ist.

## Patentansprüche (Patentansprüche für folgende(n) Vertragsstaat(en): ES)

1. Ein Verfahren zur Herstellung von Schmierölzusammensetzungen, umfassend ein Basisöl, das durch die Gegenwart von über eine Sulfonamid-Bindung an die Moleküle des Basisöls gebundenen aromatischen Gruppen funktionalisiert ist, dadurch gekennzeichnet, daß die aromatischen Gruppen und assoziierten SulfonamidBindungen zusammen die Strukturformel RSO₂NH- aufweisen , wobei R eine Phenylgruppe mit einem Substituenten -COX darstellt, wobei X eine Gruppe ist, ausgewählt aus -OH, Alkalimetall-, Erdalkalimetall und Ammoniumsalzen davon, Gruppen -OR¹, wobei R¹ eine gegebenenfalls substituierte Alkylgruppe ist, und Gruppen -NHR², wobei R² eine gegebenenfalls substituierte Alkylgruppe ist, welches Verfahren das Umsetzen eines Basisöls mit einem aromatischen Sulfonylazid umfaßt.

2. Ein Verfahren nach Anspruch 1, in welchem R¹ eine C₆₋₁₈-Alkylgruppe, eine Gruppe der Formel R³-(OCH₂CH₂)ₚ- , wobei p einen Wert von 3 bis 9 hat, und R³ eine C₉₋₁₅-Alkylgruppe , eine Gruppe der Formel H(OCH₂CH₂)_{q}-, wobei q einen Wert von 4 bis 14 hat, oder eine 2-Pyrrolidinoethylgruppe ist, oder zwei Gruppen OR¹ zusammen eine Brückengruppe der Formel -O-(CH₂CH₂O)_{q}- bilden, und die Gruppen -NHR² von C₁₋₁₈-Aminen, enthaltend 1 bis 8 Stickstoffatome, abgeleitet sind.

3. Ein Verfahren nach Anspruch 2, in welchem R eine Phenylgruppe mit einem Substituenten -CONHR² ist, wobei die Gruppe -NHR² von 3-Dimethylamino-1-propylamin abgeleitet ist.

4. Ein Verfahren nach einem der Ansprüche 1 bis 3, in welchem das Basisöl mineralischen Ursprungs ist.

5. Ein Verfahren nach einem der Ansprüche 1 bis 4 , welches das Erhitzen des Basisöls mit einem aromatischen Sulfonylazid der Formel R'-SO₂-N₃ , wobei R' eine Phenylgruppe mit einem Substituenten -COOH ist, bei einer Temperatur im Bereich von 100 bis 300°C, gegebenenfalls gefolgt von einer Neutralisation der resultierenden Zusammensetzung mit einer Alkalimetall- oder Erdalkalimetallbase, Ammoniak oder einem Amin, oder von weiterem Umsetzen der resultierenden Zusammensetzung, gegebenenfalls nach Umwandlung der -COOH-Gruppen in COCl-Gruppen, mit einem Alkohol der Formel HOR¹, wobei R¹ eine gegebenenfalls substituierte Alkylgruppe ist, oder mit einem Amin NH₂R², wobei R² eine gegebenenfalls substituierte Alkylgruppe ist, umfaßt.

6. Ein Verfahren nach Anspruch 5, in welchem das Amin NH₂R² ein C₁₋₁₈-Amin mit 1 bis 8 Stickstoffatomen ist.

7. Ein Verfahren nach Anspruch 6, in welchem das Amin NH₂R² 3-Dimethylamino-1-propylamin ist.

## Revendications (Revendications pour l'(les) Etat(s) contractant(s) suivant(s): DE, FR, GB, IT, NL)

1. Composition d'huile lubrifiante comprenant une huile de base fonctionnalisée par la présence de groupes aromatiques attachés aux molécules de l'huile de base par une liaison sulfonamido, caractérisée en ce que les groupes aromatiques et les liaisons sulfonamido associées ont ensemble la structure RSO₂NH- où R représente un groupe phényle portant un substituant -COX, où x est une portion choisie parmi -OH et les sels de métaux alcalins, de métaux alcalino-terreux et d'ammonium qui en dérivent, des groupes -OR¹, où R¹ est un groupe alcoyle éventuellement substitué, et des groupes -NHR², où R² est un groupe alcoyle éventuellement substitué.

2. Composition selon la revendication 1, dans laquelle R¹ est un groupe alcoyle en C₆₋₁₈, un groupe de formule R³-(OCH CH₂)ₚ-, où p a une valeur de 3 à 9 et R³ est un groupe alcoyle en C₉₋₁₅, un groupe de formule H(OCH₂CH₂)_{q}-, où q a une valeur de 4 à 14, ou un groupe 2-pyrrolidinoéthyle, ou deux groupes OR¹ sont ensemble un groupe formant pont de formule -O-(CH₂CH₂O)_{q}- et les groupes -NHR² sont dérivés d'amines en C₁₋₁₈ contenant 1 à 8 atomes d'azote.

3. Composition selon la revendication 2, dans laquelle R représente un groupe phényle portant un substituant -COHNR², où le groupe -NHR² est dérivé de la 3-diméthylamino-1-propylamine.

4. Composition selon l'une quelconque des revendications 1 à 3, dans laquelle l'huile de base est d'origine minérale.

5. Un procédé pour la préparation d'une composition selon l'une quelconque des revendications 1 à 4, qui comprend la réaction de l'huile de base avec un sulfonyl azide aromatique.

6. Un procédé selon la revendication 5, qui comprend le chauffage de l'huile de base avec un sulfonyl azide aromatique de formule R'-SO₂-N₃ où R' est un groupe phényle portant un substituant -COOH, à une température comprise entre 100 et 300°C, suivi éventuellement d'une neutralisation de la composition résultante avec une base dérivée d'un métal alcalin ou d'un métal alcalino-terreux, l'ammoniaque ou une amine, ou d'une réaction ultérieure de la composition résultante, éventuellement après conversion des groupes -COOH en groupes -COCl, avec un alcool de formule HOR¹, où R¹ est un groupe alcoyle éventuellement substitué, ou avec une amine NHR², où R² est un groupe alcoyle éventuellement substitué.

7. Un procédé selon la revendication 6, dans lequel l'amine NH₂R² est une amine en C₁₋₁₈ contenant 1 à 8 atomes d'azote.

8. Un procédé selon la revendication 7, dans lequel l'amine NH₂R² est la 3-diméthylamino-1-propylamine.

## Revendications (Revendications pour l'(les) Etat(s) contractant(s) suivant(s): ES)

1. Un procédé pour la préparation d'une composition d'huile lubrifiante comprenant une huile de base fonctionnalisée par la présence de groupes aromatiques attachés aux molécules de l'huile de base par une liaison sulfonamido, caractérisée en ce que les groupes aromatiques et les liaisons sulfonamido associées ont ensemble la structure RSO₂NH- où R représente un groupe phényle portant un substituant -COX, où X est une portion choisie parmi -OH et les sels de métaux alcalins, de métaux alcalino-terreux et d'ammonium qui en dérivent, des groupes -OR¹, où R¹ est un groupe alcoyle éventuellement substitué, et des groupes -NHR², où R² est un groupe alcoyle éventuellement substitué, procédé selon lequel on fait réagir une huile de base avec un sulfonyl azide aromatique.

2. Procédé selon la revendication 1, dans lequel R¹ est un groupe alcoyle en C₆₋₁₈, un groupe de formule R₃-(OCH₂CH₂)ₚ-, où p a une valeur de 3 à 9 et R³ est un groupe alcoyle en C₉₋₁₅, un groupe de formule H(OCH₂CH₂)_{q}-, où q a une valeur de 4 à 14, ou un groupe 2-pyrrolidinoéthyle, ou deux groupes OR¹ sont ensemble un groupe formant pont de formule -O-(CH²CH²O)_{q}- et les groupes -NHR² sont dérivés d'amines en C₁₋₁₈ contenant 1 à 8 atomes d'azote.

3. Un procédé selon la revendication 2, dans lequel R représente un groupe phényle portant un substituant -COHNR², où le groupe -NHR² est dérivé de la 3-diméthylamino-1-propylamine.

4. Un procédé selon l'une quelconque des revendications 1 à 3, dans laquelle l'huile de base est d'origine minérale.

5. Un procédé selon l'une quelconque des revendications 1 à 4, qui comprend le chauffage de l'huile de base avec un sulfonyl azide aromatique de formule R'-SO₂-N₃ où R' est un groupe phényle portant un substituant -COOH, à une température comprise entre 100 et 300°C, suivi éventuellement d'une neutralisation de la composition résultante avec une base dérivée d'un métal alcalin ou d'un métal alcalino-terreux, l'ammoniaque ou une amine, ou d'une réaction ultérieure de la composition résultante, éventuellement après conversion des groupes -COOH en groupes -COCl, avec un alcool de formule HOR¹, où R¹ est un groupe alcoyle éventuellement substitué, ou avec une amine NH₂R², où R² est un groupe alcoyle éventuellement substitué.

6. Un procédé selon la revendication 5, dans lequel l'amine NH₂R² est une amine en C₁₋₁₈ contenant 1 à 8 atomes d'azote.

7. Un procédé selon la revendication 6, dans lequel l'amine NH₂R² est la 3-diméthylamino-1-propylamine.
